# EUROPEAN PATENT APPLICATION

(11) **EP 4 822 777 A1**
(43) Date of publication of application: **14.10.2026**
(21) Application number: 24900368.2
(22) Date of filing: 07.11.2024
(51) Int. Cl.: H01M 4/48, H01M 4/36

(54) **NEGATIVE ELECTRODE ACTIVE MATERIAL AND METHOD FOR PRODUCING SAME**

(30) Priority: 08.12.2023 JP 2023207805
(71) Applicant: SHIN-ETSU CHEMICAL CO., LTD., Tokyo 100-0005 (JP)
(72) Inventor: KOSHIKAWA, Hidenori, Annaka-shi, Gunma 379-0125 (JP); HIROSE, Takakazu, Annaka-shi, Gunma 379-0125 (JP); TAKAHASHI, Kohta, Annaka-shi, Gunma 379-0125 (JP); ISHIKAWA, Takuya, Annaka-shi, Gunma 379-0125 (JP); OSAWA, Yusuke, Annaka-shi, Gunma 379-0125 (JP); AOKI, Shotaro, Annaka-shi, Gunma 379-0125 (JP)
(74) Representative: Schicker, Silvia
(86) International application number: PCT/JP2024/039623
(87) International publication number: WO 2025/121073

(57) **Abstract**

The present invention is a negative electrode active material containing negative electrode active material particles, in which the negative electrode active material particles contain a porous carbon structure, a low-valent nano silicon oxide in an amorphous state is dispersed within the porous carbon structure, the low-valent nano silicon oxide includes SiOx where "x" is less than 1.0, and at least a portion of a surface layer portion of the low-valent nano silicon oxide that is exposed on a surface of the porous carbon structure is coated with a condensation reaction product of at least one of an organopolysiloxane and a silicone oligomer having at least one of a silanol group and an alkoxy group that is directly bonded to a silicon atom. This provides the negative electrode active material capable of improving battery characteristics thereof and increasing a capacity thereof.

## Description

### TECHNICAL FIELD

The present invention relates to a negative electrode active material and a method for producing the same.

### BACKGROUND ART

In recent years, small electronic devices, represented by mobile terminals, have been widely used and are urgently required to reduce the size and weight and to extend service lifetime. Such market requirements have advanced the development of particularly small and lightweight secondary batteries with higher energy densities. These secondary batteries are considered to find application not only for small electronic devices but for large electronic devices, such as, typically, automobiles, as well as power storage systems such as, typically, houses.

Among these, lithium-ion secondary batteries are easy to reduce in size and increase the capacity and have a higher energy density than lead and nickelcadmium batteries, receiving considerable attention.

The lithium-ion secondary battery described above has a positive electrode, a negative electrode, and a separator, along with an electrolytic solution. The negative electrode includes a negative electrode active material related to charge-and-discharge reactions.

A negative electrode active material, which is usually made of a carbon-based active material, is required to further improve the battery capacity for recent market requirements. The use of silicon as a negative electrode active material is considered to improve the battery capacity, for silicon has a theoretical capacity (4199 mAh/g) ten times or more than that of graphite (372 mAh/g). Such a material is thus expected to significantly improve the battery capacity. The development of silicon materials for use as negative electrode active materials includes not only silicon as a simple material but also alloys thereof and compounds thereof, typically oxides. The consideration of active material shapes ranges from a coated type, which is a standard for a carbon-based active material, to an integrated type in which the material is directly deposited on a current collector.

The use of silicon as a main material of a negative electrode active material, however, causes expansion and contraction of the negative electrode active material when charging or discharging, thereby making the negative electrode active material easy to break, particularly near a surface layer thereof. In addition, this negative electrode active material produces ionic substances in an interior thereof and is thus easy to break. The breakage of the surface layer of the negative electrode active material creates a new surface, increasing a reaction area of the active material. The new surface then causes the decomposition reaction of the electrolytic solution and is coated with a decomposition product of the electrolytic solution, thereby consuming the electrolytic solution. This makes cycle characteristics easy to reduce.

To improve initial efficiency and cycle characteristics of the battery, various investigations have been made so far on a negative electrode active material mainly containing the silicon material and an electrode structure for a lithium-ion secondary battery.

Specifically, for a purpose of obtaining good cycle characteristics and high safety, silicon and amorphous silicon dioxide are simultaneously deposited by using a vapor deposition method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input and output characteristics, an active material containing silicon and oxygen is produced to form an active material layer having a high oxygen ratio near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

To improve the first-cycle charge-and-discharge efficiency, a nano-composite having a Si phase, SiO₂, and a M_{y}O metal oxide is used (for example, see Patent Document 5). To improve the cycle characteristics, SiOₓ (0.8≤x≤1.5 and particle diameter range = 1 µm to 50 µm) and a carbon material are mixed, and the mixture is calcined at a high temperature (for example, see Patent Document 6). To improve the cycle characteristics, a mole ratio of oxygen to silicon in a negative electrode active material is set to 0.1 to 1.2, and the active material is regulated within a range that a difference of maximum value and minimum value in the mole ratio near an interface between the active material and a current collector is 0.4 or less (for example, see Patent Document 7). To improve battery load characteristics, metal oxide containing lithium is used (for example, see Patent Document 8). To improve the cycle characteristics, a hydrophobic layer such as a silane compound is formed on a surface layer of a silicon material (for example, see Patent Document 9).

To improve the cycle characteristics, silicon oxide is used, and a graphite coating is formed on a surface layer of the silicon oxide to impart conductivity (for example, see Patent Document 10). In Patent Document 10, regarding a shift value obtained by a RAMAN spectrum corresponding to the graphite coating, broad peaks appear at 1330 cm⁻¹ and 1580 cm⁻¹, and a strength ratio thereof I₁₃₃₀/I₁₅₈₀ is 1.5 < I₁₃₃₀/I₁₅₈₀ < 3. To achieve the high battery capacity and to improve the cycle characteristics, a particle having a silicon fine crystal phase dispersed in silicon dioxide is used (for example, see Patent Document 11). To improve overcharge-overdischarge characteristics, a silicon oxide in which an atomic ratio between silicon and oxygen is regulated to 1:y (0<y<2) is used (for example, see Patent Document 12).

As a lithium-ion secondary battery using silicon oxide, Hitachi Maxell, Ltd. started to ship a prismatic secondary battery for a smartphone that adopted a nano silicon composite in June, 2010 (for example, see Non Patent Document 1). Silicon oxide proposed by Hohl is a composite material with Si⁰⁺ to Si⁴⁺, which has various oxidation states (Non Patent Document 2). Kapaklis proposes a disproportionation structure that is to be separated into Si and SiO₂ by applying thermal load to silicon oxide (Non Patent Document 3).

Miyachi et al. pay attention to Si and SiO₂, which contribute to charge-and-discharge, among the silicon oxides having the disproportionation structure (Non Patent Document 4), and Yamada et al. propose a formula of a reaction between the silicon oxide and Li as follows (Non Patent Document 5).

2SiO(Si+SiO₂) + 6.85Li⁺ + 6.85e⁻ → 1.4Li_{3.75}Si + 0.4Li₄SiO₄ + 0.2SiO₂

In the reaction formula, Si and SiO₂, constituting silicon oxide, react with Li to be separated into a Li silicide and a Li silicate, and partially unreacted SiO₂.

The generated Li silicate, which is an irreversible component, is generally supposed to be a stable substance that does not release Li once formed. A capacity per weight calculated from this reaction formula has a value close to an experimental value, and this reaction formula is recognized as a reaction mechanism of silicon oxide. Kim et al. identify the Li silicate, which is the irreversible component generated with charge-and-discharge of silicon oxide, as Li₄SiO₄ by using ⁷Li-MAS-NMR and ²⁹Si-MAS-NMR (Non Patent Document 6).

This irreversible capacity is the weakest point of silicon oxide, and improvement is required. Accordingly, Kim et al. produce a negative electrode, which has remarkably improved first-cycle efficiency as a battery and is practically usable, by using a Li pre-doping method to form the Li silicate in advance (Non Patent Document 7). Furthermore, instead of employing a Li doping method on an electrode, a Li processing method using powder is also proposed, thereby achieving an improvement in an irreversible capacity (Patent Document 13).

On the other hand, Li metal used for Li doping exhibits significant price volatility depending on market conditions, posing various challenges when considered for industrial purposes. Accordingly, by employing CVD-Si-C, in which porous carbon is subjected to silane gas to form nano silicon in an interior of the porous carbon, a higher energy density is achieved than that of Li-doped SiO (Patent Documents 14 and 15).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A
Patent Document 14: US 10,608,254 B2
Patent Document 15: US 11,165,054 B2

### NON PATENT LITERATURE

Non Patent Document 1: Battery Association of Japan, Newsletter "Denchi (battery)", May 1, 2010, p. 10
Non Patent Document 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.
Non Patent Document 3: V. Kapaklis, J. Non-Crystalline Solids, 354 (2008) 612.
Non Patent Document 4: Mariko Miyachi, Hironori Yamamoto, and Hidemasa Kawai, J. Electrochem. Soc. 2007 volume 154, issue 4, A376-A380
Non Patent Document 5: M. Yamada, A. Inaba, A. Ueda, K. Matsumoto, T. Iwasaki, T. Ohzuku, J. Electrochem. Soc., 159, A1630 (2012)
Non Patent Document 6: Taeahn Kim, Sangjin Park, and Seung M. Oh, J. Electrochem. Soc. volume 154, (2007), A1112-A1117.
Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: The Latest Development Trends on Lithium-ion Batteries for xEV, P96-111, CMC Publishing, November 27, 2020.

### SUMMARY OF INVENTION

### TECHNICAL PROBLEM

As described above, small electronic devices, represented by mobile terminals, have been advancing recently toward high performance and multifunctionality, and a lithium-ion secondary battery, which is the main electric source thereof, is required to increase battery capacity. As a method to solve this problem, it is desired to develop a lithium-ion secondary battery having a negative electrode using a silicon material as a main material.

Moreover, a lithium-ion secondary battery using a silicon material is desired to have initial charge-and-discharge characteristics and cycle characteristics almost equivalent to those of a lithium-ion secondary battery using a carbon-based active material. Thereupon, the cycle characteristics and the initial charge-and-discharge characteristics have been improved by using a negative electrode active material that is silicon oxide modified by insertion and partial extraction of Li. In recent years, an irreversible capacity, which is a disadvantage of the silicon oxide, has been reduced by using the silicon oxide as a main material, and by containing Li in advance to produce Li silicate. Such silicon oxide is actually beginning to be marketed. Even when Li-SiO-C, being silicon oxide reacted with Li (Non Patent Document 8), is used to completely replace a carbon negative electrode material to produce a prototype of a battery, the resulting improvement in capacity remains only in the high-20% range compared with that in the carbon negative electrode material. This indicates that, in consideration of the performance enhancement of small electronic devices (such as 5G devices) and the increased driving range of electric vehicles, further improvement in the battery capacity is required.

Accordingly, CVD-Si-C having less irreversible capacity is developed; however, it has been known that fast charging performance and battery cycle characteristics are insufficient due to reaction between Si and an electrolytic solution.

The present invention has been made in view of the above problems. An object of the present invention is to provide a negative electrode active material capable of improving the battery cycle characteristics thereof and increasing the capacity thereof.

### SOLUTION TO PROBLEM

To achieve the object, the present invention provides a negative electrode active material containing negative electrode active material particles, wherein
the negative electrode active material particles contain a porous carbon structure,
a low-valent nano silicon oxide in an amorphous state is dispersed within the porous carbon structure,
the low-valent nano silicon oxide includes SiOx where "x" is less than 1.0, and
at least a portion of a surface layer portion of the low-valent nano silicon oxide that is exposed on a surface of the porous carbon structure is coated with a condensation reaction product of at least one of an organopolysiloxane and a silicone oligomer having at least one of a silanol group and an alkoxy group that is directly bonded to a silicon atom.

The inventive negative electrode active material contains the low-valent nano silicon oxide in the amorphous state, which is dispersed within the porous carbon structure; therefore, owing to the presence of the porous carbon structure, an adverse effect caused by expansion of the low-valent nano silicon oxide within the porous carbon structure can be mitigated. Furthermore, although typical SiO contains Si⁴⁺ as an irreversible component, states represented by SiOx where "x" is less than 1.0 are included in the inventive negative electrode active material, and thus, a lower irreversible capacity compared with that of typical SiO can be maintained. Moreover, Si-O bonding can suppress decomposition of an electrolytic solution, which in turn can reduce SEI (Solid Electrolyte Interphase) that is deposited on the surface layer portion. In addition, at least a portion of the surface layer portion of the low-valent nano silicon oxide that is exposed on the surface of the porous carbon structure is coated with the condensation reaction product of at least one of the organopolysiloxane and the silicone oligomer having at least one of the silanol group and the alkoxy group that is directly bonded to a silicon atom, thereby suppressing decomposition of the electrolytic solution. As a result, an excessive decomposition of the electrolytic solution is suppressed, thereby achieving the improvement of cycle characteristics of a non-aqueous electrolyte secondary battery.

Moreover, the organopolysiloxane preferably has a constitutional unit represented by the following general formula (1), and a group represented by the following general formula (2) that is directly bonded to a silicon atom:

R¹-SiO_{3/2} (1)

wherein R¹ represents a substituted or unsubstituted alkyl group having 1 to 3 carbon atoms, and

-OR² (2)

wherein R² represents a hydrogen atom or a substituted or unsubstituted alkyl group having 1 to 6 carbon atoms.

When at least a portion of the surface layer portion of the low-valent nano silicon oxide that is exposed on the surface of the porous carbon structure is coated with the condensation reaction product of such an organopolysiloxane, the decomposition of the electrolytic solution can be reliably suppressed, and thus, the cycle characteristics can be improved.

Moreover, the silicone oligomer preferably has a constitutional unit represented by the following general formula (3), and a group represented by the following general formula (4) that is directly bonded to a silicon atom:

R³SiO_{2/2}(OR⁴) (3)

wherein each R³ independently represents a substituted or unsubstituted alkyl group having 1 to 3 carbon atoms, and each R⁴ independently represents a hydrogen atom or a substituted or unsubstituted alkyl group having 1 to 6 carbon atoms, and

-OR⁵ (4)

wherein R⁵ represents a hydrogen atom or a substituted or unsubstituted alkyl group having 1 to 6 carbon atoms.

When at least a portion of the surface layer portion of the low-valent nano silicon oxide that is exposed on the surface of the porous carbon structure is coated with the condensation reaction product of such a silicone oligomer, the decomposition of the electrolytic solution can be reliably suppressed, and thus, the cycle characteristics can be improved.

Moreover, the condensation reaction product preferably has a thickness of 0.1 nm or more and 10 nm or less.

With the condensation reaction product having such a thickness, the decomposition of the electrolytic solution can be further suppressed, and thus, the cycle characteristics can be further improved.

Moreover, the low-valent nano silicon oxide is preferably in a substantially composite state of 0-valent, 1-valent, and 2-valent.

In this way, with the low-valent nano silicon oxide being substantially the composite state of 0-valent, 1-valent, and 2-valent, a lower irreversible capacity can be achieved.

Moreover, the low-valent nano silicon oxide dispersed in the porous carbon structure preferably has "x" that increases from a center toward a surface layer of the porous carbon structure.

In this way, in the present invention, since the low-valent nano silicon oxide is dispersed in the porous carbon structure, the porous carbon structure tends to have "x" that increases (oxygen composition ratio becomes higher) from the center toward the surface layer of the porous carbon structure during the production. Due to a high oxidation ratio of silicon on the surface, the decomposition of the electrolytic solution can be more effectively suppressed. Meanwhile, the oxidation ratio of silicon within the active material is lower, thereby enabling a further increase in battery capacity.

Moreover, a grain size of 0-valent Si constituting the low-valent nano silicon oxide is preferably in a range of 1 nm to 5 nm, in which the grain size is calculated using Scherrer's equation from a peak measured by X-ray diffraction measurement of the negative electrode active material particles.

It is preferable that the 0-valent Si has a grain size at which the Si is regarded as having a substantially amorphous structure.

Moreover, the porous carbon structure is preferably predominantly of Type I according to the IUPAC classification, and has a surface area of 1400 m²/g or more and a pore volume of 1 cm³/g or more.

With the porous carbon structure having such the IUPAC classification, the surface area, and the pore volume, the negative electrode active material can efficiently contain a larger amount of the low-valent nano silicon oxide. In particular, the structure of type I according to the IUPAC classification facilitates the smooth formation of Si-O bonds after deposition.

Moreover, the present invention provides a method for producing a negative electrode active material containing negative electrode active material particles, the method comprising the steps of:
providing a porous carbon structure;
depositing silicon within the porous carbon structure by introducing monosilane gas to the porous carbon structure while heating;
cooling a material in which silicon has been deposited within the porous carbon structure to 50°C or lower;
after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure; and
coating at least a portion of a surface layer portion of the low-valent nano silicon oxide with a condensation reaction product of at least one of an organopolysiloxane and a silicone oligomer having at least one of a silanol group and an alkoxy group that is directly bonded to a silicon atom.

With such a method for producing a negative electrode active material, as described above, it is possible to easily and efficiently produce a negative electrode active material in which the low-valent nano silicon oxide in an amorphous state is dispersed within the porous carbon structure and at least a portion of the surface layer portion of the low-valent nano silicon oxide is coated with the condensation reaction product of at least one of the organopolysiloxane and the silicone oligomer having at least one of the silanol group and the alkoxy group that is directly bonded to a silicon atom.

Moreover, the condensation reaction product is preferably formed on at least a portion of the surface layer portion of the low-valent nano silicon oxide by hydrolysis and dehydration-condensation of at least one of the organopolysiloxane and the silicone oligomer, thereby coating at least a portion of the surface layer portion of the low-valent nano silicon oxide.

When such hydrolysis and dehydration-condensation of at least one of the organopolysiloxane and the silicone oligomer is employed, the condensation reaction product can be easily formed on the surface layer portion of the low-valent nano silicon oxide.

Moreover, at least one of the organopolysiloxane and the silicone oligomer is preferably subjected to the hydrolysis and the dehydration-condensation by adding a catalytic amount of a condensation catalyst.

When such a catalytic amount of the condensation catalyst is added, at least one of the organopolysiloxane and the silicone oligomer can be easily subjected to the hydrolysis and the dehydration-condensation.

### ADVANTAGEOUS EFFECTS OF INVENTION

The inventive negative electrode active material contains the low-valent nano silicon oxide in the amorphous state, which is dispersed within the porous carbon structure. Consequently, owing to the presence of the porous carbon structure, when the low-valent nano silicon oxide within the porous carbon structure is expanded, the adverse effect caused by the expansion can be mitigated. In addition, the inventive negative electrode active material includes SiOx where "x" is less than 1.0; consequently, the lower irreversible capacity compared with that of typical SiO can be maintained. Moreover, Si-O bonds can suppress decomposition of the electrolytic solution, which in turn can reduce the SEI that is deposited on the surface layer portion. In addition, at least a portion of the surface layer portion of the low-valent nano silicon oxide that is exposed on the surface of the porous carbon structure is coated with the condensation reaction product of at least one of the organopolysiloxane and the silicone oligomer having at least one of the silanol group and the alkoxy group that is directly bonded to a silicon atom, thereby suppressing decomposition of the electrolytic solution. As a result, the excessive decomposition of the electrolytic solution is suppressed, thereby achieving the improvement of the cycle characteristics of the non-aqueous electrolyte secondary battery.

In addition, the inventive method for producing a negative electrode active material can easily and efficiently produce a negative electrode active material in which the low-valent nano silicon oxide in an amorphous state is dispersed within the porous carbon structure and at least a portion of the surface layer portion of the low-valent nano silicon oxide is coated with the condensation reaction product of at least one of the organopolysiloxane and the silicone oligomer having at least one of the silanol group and the alkoxy group that is directly bonded to a silicon atom.

### BRIEF DESCRIPTION OF DRAWINGS

[FIG. 1] is a sectional view illustrating a configuration of a negative electrode containing a negative electrode active material according to the present invention.
[FIG. 2] is an exploded view illustrating a configuration example of a lithium-ion secondary battery (laminate film type) that contains a negative electrode active material according to the present invention.
[FIG. 3] is a flowchart showing an example of a method for producing a negative electrode active material according to the present invention.
[FIG. 4] is a graph showing a change in a depth-profile measurement in an O 1s region in an XPS measurement of a negative electrode active material in Example 1.
[FIG. 5] shows X-ray diffraction spectra in Examples 1, 2, 10, and 11.

### DESCRIPTION OF EMBODIMENTS

Hereinafter, embodiments of the present invention will be described. However, the present invention is not limited thereto.

As described above, as a technique to increase battery capacity of a lithium-ion secondary battery, there have been investigations to use a negative electrode, in which a low-valent nano silicon oxide is used as a main material in a carbon structure, as a negative electrode for the lithium-ion secondary battery. The lithium-ion secondary battery using this active material is desired to have a high battery capacity while exhibiting battery characteristics almost equivalent to a lithium-ion secondary battery using a carbon-based active material.

The present inventors, therefore, have diligently investigated to obtain a negative electrode active material that can improve initial charge-and-discharge characteristics and increase battery capacity while obtaining excellent cycle characteristics when employed for a negative electrode of a secondary battery, and achieved the present invention.

In particular, CVD-Si-C, such as that disclosed in Patent Documents 14 and 15, has a problem of excessive reactivity with an electrolytic solution. In the present invention, in order to suppress such a reaction with the electrolytic solution, a Si segment is converted into a Si-O phase and resulting siloxane bonds inherent to silicon oxide are employed; consequently, the reaction and accompanying decomposition of the electrolytic solution can be significantly suppressed. In addition, the Si-O material having siloxane bonds has excellent Li acceptability, thereby developing a negative electrode active material capable of ensuring fast charging. Furthermore, by suppressing the decomposition reaction of the electrolytic solution with SiOx phase, and further, by coating at least a portion of the surface layer portion of the low-valent nano silicon oxide exposed on the surface of the porous carbon structure with a condensation reaction product of at least one of an organopolysiloxane and a silicone oligomer having at least one of a silanol group and an alkoxy group that is directly bonded to a silicon atom, a negative electrode active material that can further suppress the decomposition of the electrolytic solution is developed.

### [Inventive Negative Electrode Active Material]

The inventive negative electrode active material is a negative electrode active material containing negative electrode active material particles, in which the negative electrode active material particles contain a porous carbon structure, and a low-valent nano silicon oxide in an amorphous state is dispersed within the porous carbon structure. The low-valent nano silicon oxide includes SiOx where "x" is less than 1.0, and at least a portion of the surface layer portion of the low-valent nano silicon oxide that is exposed on the surface of the porous carbon structure is coated with the condensation reaction product of at least one of the organopolysiloxane and the silicone oligomer having at least one of the silanol group and the alkoxy group that is directly bonded to a silicon atom.

Such a negative electrode active material contains the low-valent nano silicon oxide in the amorphous state, which is dispersed within the porous carbon structure; therefore, owing to the presence of the porous carbon structure, an adverse effect caused by expansion of the low-valent nano silicon oxide within the porous carbon structure can be mitigated. Further, although typical SiO contains Si⁴⁺ as an irreversible component, states represented by SiOx where "x" is less than 1.0 are included in the inventive negative electrode active material, and thus, a lower irreversible capacity compared with typical SiO can be maintained. Moreover, Si-O bonding can suppress the decomposition of an electrolytic solution, which in turn can reduce SEI (Solid Electrolyte Interphase) that is deposited on the surface layer portion. In addition, at least a portion of the surface layer portion of the low-valent nano silicon oxide that is exposed on the surface of the porous carbon structure is coated with a condensation reaction product of at least one of an organopolysiloxane and a silicone oligomer having at least one of a silanol group and an alkoxy group that is directly bonded to a silicon atom, thereby suppressing decomposition of the electrolytic solution. As a result, an excessive decomposition of the electrolytic solution is suppressed, thereby achieving the improvement of cycle characteristics of a non-aqueous electrolyte secondary battery.

That is, the inventive negative electrode active material has a Si-phase converted into Si-Ox having siloxane bonds for suppressing the decomposition reaction of the electrolytic solution that is unable to be sufficiently suppressed by CVD-Si-C generated from typical silane gas. However, since 4-valent Si constituting SiO becomes an irreversible component, by adjusting SiOx having a valence of 2 or fewer, the irreversible capacity lower than that of the typical SiO can be maintained, although this irreversible capacity is larger than that of silicon alone. Moreover, the Si-O bonds can suppress decomposition of the electrolytic solution, which in turn can reduce the SEI (Solid Electrolyte Interphase) that is deposited on the surface layer portion of CVD-Si-C. Since a moiety of this material that mainly contributes charge-and-discharge is the low-valent nano silicon oxide, the material can be defined as CVD-SiOx-C in contrast to CVD-Si-C. In this way, the active material produced is capable of having high energy density and fast charging performance while maintaining excellent cycle characteristics of the battery. Furthermore, at least a portion of the surface layer portion of the low-valent nano silicon oxide that is exposed on the surface of the porous carbon structure is coated with the condensation reaction product of at least one of the organopolysiloxane and the silicone oligomer having at least one of the silanol group and the alkoxy group that is directly bonded to a silicon atom, thereby suppressing the decomposition of the electrolytic solution. As a result, the excessive decomposition of the electrolytic solution is suppressed, thereby achieving the improvement of the cycle characteristics of the non-aqueous electrolyte secondary battery.

When the organopolysiloxane is used, the organopolysiloxane preferably has a constitutional unit represented by the following general formula (1), and a group represented by the following general formula (2) that is directly bonded to a silicon atom:

R¹-SiO_{3/2} (1)

in which R¹ represents a substituted or unsubstituted alkyl group having 1 to 3 carbon atoms, and

-OR² (2)

in which R² represents a hydrogen atom or a substituted or unsubstituted alkyl group having 1 to 6 carbon atoms.

When at least a portion of the surface layer portion of the low-valent nano silicon oxide that is exposed on the surface of the porous carbon structure is coated with the condensation reaction product of the organopolysiloxane, the decomposition of the electrolytic solution can be reliably suppressed, and thus, the cycle characteristics can be improved.

Note that, although not limited thereto, KR-220L (a methylpolysiloxane having a silanol group and having CH₃-SiO_{3/2} as a constitutional unit, manufactured by Shin-Etsu Chemical Co., Ltd.) can be employed as a specific example of the organopolysiloxane.

Moreover, when a silicone oligomer is employed, the silicone oligomer preferably has a constitutional unit represented by the following general formula (3), and a group represented by the following general formula (4) that is directly bonded to a silicon atom:

R³SiO_{2/2}(OR⁴) (3)

in which each R³ independently represents a substituted or unsubstituted alkyl group having 1 to 3 carbon atoms, and each R⁴ independently represents a hydrogen atom or a substituted or unsubstituted alkyl group having 1 to 6 carbon atoms, and

-OR⁵ (4)

in which R⁵ represents a hydrogen atom or a substituted or unsubstituted alkyl group having 1 to 6 carbon atoms.

When at least a portion of the surface layer portion of the low-valent nano silicon oxide that is exposed on the surface of the porous carbon structure is coated with the condensation reaction product of the silicone oligomer, the decomposition of the electrolytic solution can be reliably suppressed, and thus, the cycle characteristics can be improved.

Note that, although not limited thereto, X-40-9225 (a silicone oligomer having a methoxy group directly bonded to a silicon atom and having CH₃SiO_{2/2}(OCH₃) as a constitutional unit, manufactured by Shin-Etsu Chemical Co., Ltd.) can be employed as a specific example of the silicone oligomer.

A grain size of the low-valent nano silicon oxide can be determined by TEM-EDX. Conditions therefor can be set as follows. The negative electrode active material is subjected to cross-sectional processing for both surfaces using a focused ion beam (FIB) processing apparatus under non-exposure conditions to the atmosphere. XVision200DB manufactured by SIINT Inc. is used as the FIB processing apparatus, and an acceleration voltage applied is set to 30 kV. The TEM observation is performed by using Tecnai G2 F20 manufactured by FEI Company, and an acceleration voltage is set to 200 kV. An r-TEM manufactured by EDAX Corporation is used for EDX, and an acceleration voltage is set to 200 kV.

When the particle size of the low-valent nano silicon oxide increases, Si-O bonding becomes difficult to form. As described later, in the inventive method for producing a negative electrode active material, specifically, during a process of decomposing SiH₄ to produce the amorphous Si, Si is intentionally reacted with oxygen to produce the Si-O bonds. Consequently, when the particle size is large, an infiltration property of oxygen is poor. For example, a concentration distribution of oxygen is generated within the low-valent silicon oxide phase, and the silicon oxide phase may be converted into SiO₂. Alternatively, in this case, an interior of the phase may be in a state of Si as in CVD-Si-C described above. In addition, 0-valent amorphous Si is partially present within this low-valent nano silicon oxide grain, and it is desirable that the crystallinity of the amorphous Si is lower. When the crystallinity thereof is lowered, this increases the irreversible capacity; however, an advantage is provided in which Li acceptability is improved. Conversely, when the crystallinity is high, the decomposition reaction of the electrolytic solution inherent to Si is facilitated, resulting in degradation of the cycle characteristics.

Moreover, the condensation reaction product preferably has a thickness of 0.1 nm or more and 10 nm or less.

With the condensation reaction product having such a thickness, the decomposition of the electrolytic solution can be further suppressed, and thus, the cycle characteristics can be further improved.

Moreover, in the inventive negative electrode active material, the low-valent nano silicon oxide is preferably in a substantially composite state of 0-valent, 1-valent, and 2-valent.

In this way, with the low-valent nano silicon oxide being substantially the composite state of 0-valent, 1-valent, and 2-valent, a lower irreversible capacity can be achieved.

The inventive negative electrode active material has the low-valent nano silicon oxide phase within a porous carbon material, and as for a ratio of silicon and oxygen constituting this low-valent silicon compound, SiOₓ preferably satisfies "x" that is less than 1.0, and more preferably satisfies "x" that is 0.7 or less. The lower limit of "x" is not particularly limited, but can be, for example, larger than 0. In addition, the 1-valent and 2-valent compounds are predominant in the low-valent nano silicon oxide, and the low-valent nano silicon oxide phase, which is present within the porous structure, may contain a microcrystal phase of 0-valent Si.

The valence of the low-valent nano silicon oxide can be quantified by NMR (nuclear magnetic resonance) and XPS (X-ray photoelectron spectroscopy).

The NMR measurement can be performed under the following conditions, for example.

### ²⁹Si MAS NMR (Magic Angle Spinning-Nuclear Magnetic Resonance)

· Apparatus: 700-NMR spectroscope manufactured by Bruker Corporation,
· Probe: 4mm HR-MAS rotor, 50 µL,
· Sample Spinning Speed: 10 kHz,
· Measurement Environment Temperature: 25°C.

The XPS measurement can be performed under the following conditions, for example.

### XPS

· Apparatus: X-ray photoelectron spectrometer,
· X-ray Source: Monochromatic Al Kα ray,
· X-ray Spot Diameter: 100 µm,
· Ar-ion Gun Sputtering Conditions: 0.5 kV 2 mm×2 mm.

In the inventive negative electrode active material, the grain size of 0-valent Si constituting the low-valent nano silicon oxide is preferably in a range of 1 nm to 5 nm, in which the grain size is calculated using Scherrer's equation from a peak measured by X-ray diffraction measurement of the negative electrode active material particles. It is preferable that the 0-valent Si has a grain size at which the Si is regarded as having a substantially amorphous structure.

The calculation of the crystallite size by XRD can be performed under, for example, the following conditions. In the case of a broad peak, an analysis software TOPAS can be used under the following conditions, for example.

### XRD Measurement

· Apparatus: D2 PHASER manufactured by Bruker Corporation
·X-ray Source: Cu
·Divergence Slit: 0.5°
·Incident Side Soller: 4°
·Receiving Side Soller: 4°

### Calculation of Crystallite Size

· Analysis software: DIFFRAC.TOPAS
· Method of Analysis: Peak-fitting Method
· Emission Profile: CuKa5.lam
· Function: FP (First Principle) Function
· Refinement Option: "Caluculate Error" and "Use Extrapolation" are selected.

Moreover, in the inventive negative electrode active material, the low-valent nano silicon oxide dispersed in the porous carbon structure preferably has "x" that increases from a center toward a surface layer of the porous carbon structure. In the present invention, since the low-valent nano silicon oxide is dispersed in the porous carbon structure, the porous carbon structure tends to have "x" that increases (oxygen composition ratio becomes higher) from the center toward the surface layer of the porous carbon structure during the production. Due to a high oxidation ratio of silicon on the surface, the decomposition of the electrolytic solution can be more effectively suppressed. Meanwhile, the oxidation ratio of silicon within the active material is lower, thereby enabling a further increase in the battery capacity.

### <Negative Electrode for Non-aqueous Electrolyte Secondary Battery>

Next, a configuration of a negative electrode for a non-aqueous electrolyte secondary battery containing the inventive negative electrode active material (hereinafter, also referred to as "negative electrode") will be described.

### [Configuration of Negative Electrode]

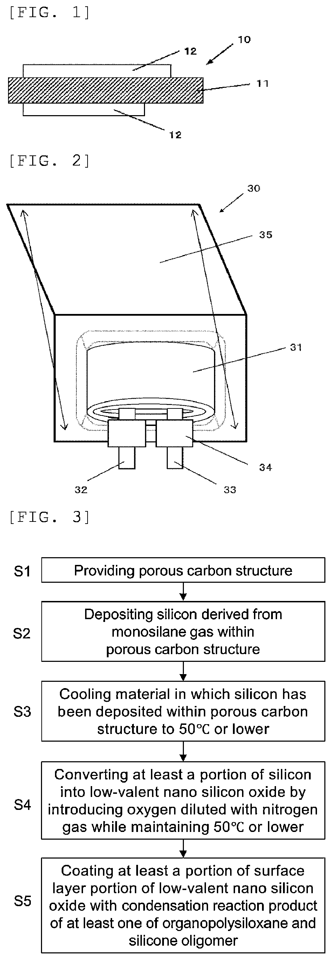

FIG. 1 shows a sectional view of a negative electrode containing the inventive negative electrode active material. As shown in FIG. 1, a negative electrode 10 is configured to have a negative electrode active material layer 12 on a negative electrode current collector 11. This negative electrode active material layer 12 may be provided on both surfaces or only one side of the surfaces of the negative electrode current collector 11. Furthermore, in the negative electrode for a non-aqueous electrolyte secondary battery according to the present invention, the negative electrode current collector 11 is not essential.

### [Negative Electrode Current Collector]

The negative electrode current collector 11 is made of a highly electrically conductive and mechanically strong material. Examples of the electrically conductive materials usable for the negative electrode current collector 11 include copper (Cu) and nickel (Ni). This electrically conductive material is preferably a material that does not form an intermetallic compound with lithium (Li).

The negative electrode current collector 11 preferably contains carbon (C) and sulfur (S), besides the main element, because these elements improve the physical strength of the negative electrode current collector. In particular, when an active material layer that expands during charging is disposed, the current collector containing the above elements has an effect of suppressing deformation of the electrode, including the current collector. The content of the contained elements, which are described above, is not particularly limited; but among them, each of the contents is preferably 100 mass ppm or less. This is because a higher effect of suppressing deformation is obtained. Such an effect of suppressing the deformation enables further improvement of the cycle characteristics.

Further, the surface of the negative electrode current collector 11 is preferably roughened, and desirably, a ten-point mean roughness Rz on the surface may be 1.5 µm or more and 5 µm or less. Examples of the roughened negative electrode current collectors include a metallic foil subjected to an electrolyzing process, embossing process, chemical etching process, etc.

### [Negative Electrode Active Material Layer]

The negative electrode active material layer 12 may contain multiple types of negative electrode active materials, such as a carbon-based active material, besides the silicon-based active material particles. Depending on battery design, other materials may be further contained, such as a thickener (also referred to as a "binding agent" or a "binder"), a conductive assistant agent, etc.

### [Method for Producing Negative Electrode Active Material and Negative Electrode]

Next, an example of a method for producing a negative electrode active material and a negative electrode using this active material for a non-aqueous electrolyte secondary battery according to the present invention will be described.

First, the method for producing a negative electrode active material contained in the negative electrode will be described. The inventive method for producing a negative electrode active material is a method for producing a negative electrode active material containing negative electrode active material particles, the method including the steps of providing a porous carbon structure, depositing silicon within the porous carbon structure by introducing monosilane gas to the porous carbon structure while heating, cooling a material in which silicon has been deposited within the porous carbon structure to 50°C or lower, after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure, and coating at least a portion of a surface layer portion of the low-valent nano silicon oxide with a condensation reaction product of at least one of an organopolysiloxane and a silicone oligomer having at least one of a silanol group and an alkoxy group that is directly bonded to a silicon atom.

With reference to Steps S1 to S5 in FIG. 3, each step of the method for producing a negative electrode active material will be described.

First, a porous carbon structure is provided (Step S1). The porous carbon structure provided here preferably includes carbon-to-carbon double bonds in at least a portion thereof.

Moreover, the porous carbon structure provided here is preferably predominantly of Type I according to the IUPAC classification, and preferably has a surface area of 1400 m²/g or more and a pore volume of 1 cm³/g or more. By classifying according to the IUPAC classification, and by providing the surface area and the pore volume, deposition of silicon can be performed in a larger amount with higher efficiency. In this context, the upper limit of the surface area is not particularly limited, but can be, for example, 3000 m²/g or less. In addition, the upper limit of the pore volume is not particularly limited, but can be, for example, 5 cm³/g or less. Moreover, the IUPAC classification, the surface area, and the pore volume can be measured by the following method.
·Specific surface area and pore volume distribution are measured by using TriStar II Plus, manufactured by Shimadzu Corporation, by a constant-volume method based on a gas adsorption method. The measurement conditions are as follows.
·Gas used: nitrogen
·Environment: under liquid nitrogen
·Pressure operating range: P/P0
·Adsorption 0 to 0.998
·Desorption 0.998 to 0.10
·Pretreatment vacuum, 200°C, 1 hour

Next, by introducing monosilane gas to the porous carbon structure provided in Step S1 while heating, silicon derived from the monosilane gas is deposited within the porous carbon structure (Step S2).

Note that after Step S1 and before Step S2, the porous carbon structure is preferably loaded in a vacuum container to be subjected to vacuuming. The vacuuming can be performed up to a degree of vacuum, e.g., approximately -100 kPa, but is not limited to this degree. Further, subsequent to vacuuming, it is preferable to restore pressure with nitrogen and heat the porous carbon structure until approximately 350 to 450°C using an external heater while introducing nitrogen. This heating can be performed for 5 minutes to 1 hour. By subjecting the porous carbon structure to such vacuuming and preheating in the presence of nitrogen, nuclei formation for silicon deposition in Step S2 is achieved, and removal of hydrogen and water adhered to the porous carbon structure is also achieved, thereby enabling more reliable silicon deposition in Step S2.

The silicon deposition in Step S2 can be performed, for example, by introducing monosilane gas at approximately 400°C to 500°C. The deposition time can be set, for example, to 30 minutes to 10 hours.

Next, the material in which silicon has been deposited within the porous carbon structure is cooled to 50°C or lower (Step S3). In this step, it is preferable to cool the material while introducing nitrogen gas, for example. In this cooling process, the material can be cooled, for example, to room temperature. Note that a more specific lower limit of the cooling temperature is not particularly limited, but can be, for example, 25°C or higher.

After the above cooling (Step S3), in a state that is adjusted such that the temperature of the material in which silicon that has been deposited within the porous carbon structure is maintained at 50°C or lower, the material in which silicon that has been deposited within the porous carbon structure is subjected to the introduction of oxygen diluted with nitrogen. As a result, at least a portion of silicon is converted into the low-valent nano silicon oxide (Step S4). Through this step, the Si-O bonds can be formed. Note that the temperature maintained here is more preferably at 35°C or lower.

The oxygen dilution by nitrogen can be, for example, 5 to 50-fold, and is preferably 10 to 30-fold. This dilution thereof can be typically 20-fold.

Further, in Step S4, when the temperature within the material rises and exceeds 50°C, silicon dioxide is partially generated, which is not preferable as the negative electrode active material. Accordingly, in this Step S4, the temperature of the material is required to be adjusted such that the temperature is maintained at 50°C or lower. In addition, in order to facilitate the oxidation reaction to promote the formation of the Si-O bonds, it is preferable that the temperature of the material in Step S4 is, for example, 25°C or higher, and more preferably 30°C or higher.

The oxidation time (time for introducing oxygen diluted with nitrogen gas) in this Step S4 can be, for example, set to 30 minutes or more and 5 hours or less, and is preferably 1 hour or more and 3 hours or less. Further, after introducing oxygen diluted with nitrogen gas, the material can be further cooled by switching to the introduction of nitrogen gas. The introduction time of nitrogen gas alone can be set to, for example, 30 minutes or more and 2 hours or less.

In the oxidation by introducing oxygen diluted with nitrogen gas as described above, it is preferable to adjust the low-valent nano silicon oxide dispersed within the porous carbon structure such that "x" increases from the center toward the surface layer of the porous carbon structure. Note that in the porous carbon structure, a pore structure has a tendency in which a cross-sectional area thereof is larger on the particle surface, and the cross-sectional area thereof becomes smaller toward the particle interior. Consequently, by oxidizing with the introduction of oxygen diluted with nitrogen gas, as in the present invention, "x" naturally tends to increase from the center toward the surface layer of the porous carbon structure.

After Step S4, at least a portion of a surface layer portion of the low-valent nano silicon oxide is then coated with a condensation reaction product of at least one of an organopolysiloxane and a silicone oligomer having at least one of a silanol group and an alkoxy group that is directly bonded to a silicon atom (Step S5).

Here, the condensation reaction product is preferably formed on at least a portion of the surface layer portion of the low-valent nano silicon oxide by hydrolysis and dehydration-condensation of at least one of the organopolysiloxane and the silicone oligomer, thereby coating at least a portion of the surface layer portion of the low-valent nano silicon oxide.

When such hydrolysis and dehydration-condensation of at least one of the organopolysiloxane and the silicone oligomer is employed, the condensation reaction product can be easily formed on the surface layer portion of the low-valent nano silicon oxide.

Moreover, at least one of the organopolysiloxane and the silicone oligomer is preferably subjected to the hydrolysis and the dehydration-condensation by adding a catalytic amount of a condensation catalyst.

When such a catalytic amount of the condensation catalyst is added, at least one of the organopolysiloxane and the silicone oligomer can be easily hydrolyzed and dehydration-condensed.

Note that, although not limited thereto, DX-9740 (an aluminum-based condensation catalyst manufactured by Shin-Etsu Chemical Co., Ltd.) can be employed as a specific example of the condensation catalyst.

Subsequently, the material is taken out from the container. Through the above steps, the low-valent nano silicon oxide in an amorphous state is dispersed within the porous carbon structure, and negative electrode active material particles can be produced in which at least a portion of the surface layer portion of the low-valent nano silicon oxide is coated with the condensation reaction product of at least one of the organopolysiloxane and the silicone oligomer having at least one of the silanol group and the alkoxy group that is directly bonded to a silicon atom.

Thus, when producing the negative electrode active material, by adjusting an amount of deposited silicon and degree of oxidation, it is preferable to set a proportion of the porous carbon structure within the entire negative electrode active material particles to 38 mass% or more and 63 mass% or less.

### <Lithium-ion Secondary Battery>

Next, a lithium-ion secondary battery of a laminate film type will be described as a concrete example of the non-aqueous electrolyte secondary battery that employs the inventive negative electrode active material described above.

### [Configuration of Laminate Film Type Secondary Battery]

A laminate film type lithium-ion secondary battery 30 shown in FIG. 2 mainly includes a wound electrode body 31 stored in a sheet-shaped exterior member 35. This wound electrode body 31 is formed by winding a positive electrode, a negative electrode, and a separator disposed between these electrodes. There is also a case of storing a laminate having a separator disposed between a positive electrode and a negative electrode. The electrode bodies of both types have a positive-electrode lead 32 attached to the positive electrode and a negative-electrode lead 33 attached to the negative electrode. The outermost circumference of the electrode bodies is protected by a protecting tape.

The positive-electrode lead 32 and the negative-electrode lead 33, for example, extend from the interior of the exterior member 35 toward the exterior in one direction. The positive-electrode lead 32 is made of, for example, a conductive material, such as aluminum, and the negative-electrode lead 33 is made of, for example, a conductive material, such as nickel or copper.

The exterior member 35 is, for example, a laminate film having a fusion-bond layer, a metallic layer, and a surface protecting layer laminated in this order. The laminate films are fusion-bonded or stuck with an adhesive or the like at the outer edges therebetween of the fusion-bond layers of two films such that each fusion-bond layer faces the electrode body 31. The fusion-bond portion is, for example, a film, such as a polyethylene or polypropylene film. The metallic portion is aluminum foil, etc. The protecting layer is, for example, nylon, etc.

In the space between the exterior member 35 and the positive and negative electrode leads, a close adhesion film 34 is inserted to prevent air from entering therein. Exemplary materials of the close adhesion film include polyethylene, polypropylene, and polyolefin resins.

The positive electrode has a positive electrode active material layer disposed on one side or both sides of a positive electrode current collector, like the negative electrode 10 shown in FIG. 1, for example.

The positive electrode current collector is made of, for example, a conductive material, such as aluminum.

The positive electrode active material layer contains any one or more positive electrode materials, in which lithium ions can be occluded and released, and may contain other materials such as a positive electrode binding agent, a positive electrode conductive assistant agent, or a dispersant, depending on a design. In this case, the details of the positive electrode binding agent and the positive electrode conductive assistant agent are the same as those of the negative electrode binding agent and the negative electrode conductive assistant agent, which have already been described, for example.

The positive electrode material is desirably a compound containing lithium. Examples of lithium-containing compounds include complex oxides composed of lithium and a transition metal element, or phosphate compounds containing lithium and a transition metal element. Among these positive electrode materials, a compound containing at least one or more of nickel, iron, manganese, and cobalt is preferable. The chemical formula of such compounds is expressed by, for example, LiₓM₁O₂ or Li_{y}M₂PO₄. In the formulae, M₁ and M₂ represent at least one or more of the transition metal elements. The values "x" and "y" represent values that vary depending on a charging or discharging state of a battery, which are typically shown as 0.05≤x≤1.10 and 0.05≤y≤1.10.

Examples of the complex oxides containing lithium and a transition metal element include a lithium cobalt complex oxide (LiₓCoO₂), a lithium nickel complex oxide (LiₓNiO₂), a lithium-nickel-cobalt complex oxide, etc. Examples of the lithium-nickel-cobalt complex oxide include lithium-nickel-cobalt-aluminum complex oxide (NCA), lithium-nickel-cobalt-manganese complex oxide (NCM), etc.

Examples of the phosphate compounds containing lithium and a transition metal element include a lithium-iron-phosphate compound (LiFePO₄), a lithium-iron-manganese-phosphate compound (LiFe₁₋ᵤMnᵤPO₄ (0<u<1)), etc. Not only higher battery capacity, but also excellent cycle characteristics can be obtained by using these positive electrode materials.

### [Negative Electrode]

The negative electrode has a configuration that is similar to that of the above negative electrode 10 for a lithium-ion secondary battery shown in FIG. 1, and, for example, has the negative electrode active material layers disposed on both surfaces of the current collector. This negative electrode preferably has a negative-electrode charge capacity larger than an electrical capacitance (battery charge capacity) provided by the positive electrode active material agent. Consequently, precipitation of lithium metal can be suppressed on the negative electrode.

The positive electrode active material layer is provided partially on both surfaces of the positive electrode current collector. Similarly, the negative electrode active material layer is also provided partially on both surfaces of the negative electrode current collector. In this case, the negative electrode active material layer provided on the negative electrode current collector, for example, has a region that does not face any positive electrode active material layer. This is intended to perform a stable battery design.

The region described above, where the negative electrode active material layer and positive electrode active material layer do not face one another, is hardly affected by charging and discharging. The state of the negative electrode active material layer is consequently retained immediately after forming intact. This enables reproducibly high-precision investigation of the composition or the like of the negative electrode active material without relying on the presence or absence of charging and discharging.

### [Separator]

The separator separates the positive electrode and the negative electrode, prevents current short-circuit due to contact between these electrodes, and passes lithium ions therethrough. This separator may be formed from, for example, a porous film made of synthetic resin or ceramic, or two or more laminated porous films to have a laminate structure. Examples of synthetic resin include polytetrafluoroethylene, polypropylene, polyethylene, etc.

### [Electrolytic Solution]

At least a part of the active material layers or the separator is impregnated with an electrolyte in liquid form (electrolytic solution). This electrolytic solution includes electrolyte salt dissolved in a solvent and may contain other materials such as additives.

The solvent to be used can be, for example, a non-aqueous solvent. Examples of the non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, tetrahydrofuran, etc. Among these, at least one or more ethylene carbonate, propylene carbonate, dimethyl carbonate, diethyl carbonate, or ethylmethyl carbonate are desirably used because better characteristics can be obtained. In this case, superior characteristics can be obtained by the combined use of a high-viscosity solvent, such as ethylene carbonate or propylene carbonate, and a low-viscosity solvent, such as dimethyl carbonate, ethylmethyl carbonate, or diethyl carbonate. This results from the improvement of the dissociation of the electrolyte salt and ionic mobility.

When an alloy-based negative electrode is employed, in particular, the solvent desirably contains at least one of the halogenated chain carbonate ester or halogenated cyclic carbonate ester. Thus, a stable coating is formed on the negative electrode active material surface at charging and discharging, particularly during charging. The halogenated chain carbonate ester is a chain carbonate ester having halogen as a constituent element (at least one hydrogen is substituted by halogen). In addition, the halogenated cyclic carbonate ester is a cyclic carbonate ester having halogen as a constituent element (that is, at least one hydrogen is substituted by halogen).

The halogen type is not particularly limited, but is preferably fluorine, for fluorine enables the formation of a better coating than other halogens. The larger number of halogens is desirable, for a coating obtained is more stable, and a decomposition reaction of the electrolytic solution is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains an unsaturated carbon bond cyclic carbonate ester, for this ester is capable of forming a stable coating on the negative electrode surface when charging and discharging, and suppressing the decomposition reaction of the electrolytic solution. Examples of the unsaturated carbon bond cyclic carbonate ester include vinylene carbonate and vinyl ethylene carbonate.

In addition, the solvent additive preferably contains sultone (cyclic sulfonic acid ester) because this improves chemical stability of a battery. Examples of the sultone include propane sultone and propene sultone.

In addition, the solvent preferably contains an acid anhydride because this improves chemical stability of the electrolytic solution. An example of the acid anhydride includes propane disulfonic acid anhydride.

The electrolyte salt can contain, for example, any one or more light metal salts, such as lithium salt. Examples of the lithium salt include lithium hexafluorophosphate (LiPF₆), lithium tetrafluoroborate (LiBF₄), etc.

The content of the electrolyte salt relative to the solvent is preferably 0.5 mol/kg or more and 2.5 mol/kg or less. This is because high ionic conductivity can be obtained.

### EXAMPLES

Hereinafter, the present invention will be more specifically described with reference to Examples and Comparative Examples of the present invention. However, the present invention is not limited to these Examples.

### (Example 1)

Through procedures below, a negative electrode active material was produced, and further, a laminate film type lithium-ion secondary battery 30 shown in FIG. 2 was produced.

The negative electrode active material was produced as follows. First, a porous carbon material (porous carbon structure) of Type I according to the IUPAC classification was provided, the material having a surface area (BET specific surface area) of 2433 m²/g, a pore volume of 1.34 cm³/g, and a particle size (D50) of 11 µm. This porous carbon material was loaded into a vacuum container and then subjected to vacuuming up to - 90 kPa. Next, the porous carbon material was restored to atmospheric pressure with nitrogen and heated to 400°C using an external heater while introducing nitrogen. After heating for 30 minutes, the temperature was raised to 415°C, and monosilane gas was introduced for deposition for 4 hours. Subsequently, the temperature was lowered to room temperature while introducing nitrogen gas. After lowering the temperature to 25°C, oxygen diluted 20-fold with nitrogen was introduced, and this introduction was adjusted such that the temperature of the material was maintained at 50°C or less, thereby forming Si-O bonds. Next, when the temperature of the material was lowered to 30°C or lower by introducing nitrogen containing oxygen for 2 hours, the nitrogen containing oxygen was switched to nitrogen gas, which was then introduced for 60 minutes. Subsequently, acetone having 2.0 mass% KR-220L (a methylpolysiloxane having a silanol group and having CH₃-SiO_{3/2} as a constitutional unit, manufactured by Shin-Etsu Chemical Co., Ltd.) dissolved therein was added to the porous carbon material. The mixture was stored in a container and then heated at 400°C for 2 hours while introducing nitrogen thereto. After cooling the material to room temperature, the material was taken out of the container and obtained as a negative electrode active material.

The methylpolysiloxane of KR-220L used herein is the above organopolysiloxane having a constitutional unit represented by the general formula (1) where alkyl group (methyl group: CH₃-) having 1 carbon atom is used as R¹.

Note that the constitutional unit is intended to represent a minimum unit of a chemical structure capable of describing a polymer chain excluding a terminal group and a junction point, and also referred to as a repeating unit.

### [Production of Negative Electrode]

The negative electrode active material (active material containing CVD-SiOx-C) produced as described above, graphite, a conductive assistant agent 1 (carbon nanotube, CNT), a conductive assistant agent 2 (carbon fine particles having a median diameter of approximately 50 nm), sodium polyacrylate, and carboxymethylcellulose (hereinafter, referred to as CMC) were mixed at a dry mass ratio of 9.3 : 83.7 : 1 : 1 : 4 : 1. Then the mixture was diluted with pure water to form a negative electrode mixture slurry.

In addition, as a negative electrode current collector, an electrolytic copper foil having a thickness of 15 µm was used. This electrolytic copper foil contained carbon and sulfur at each concentration of 70 ppm by mass. Finally, the negative electrode mixture slurry was applied onto the negative electrode current collector and dried in a vacuum atmosphere at 100°C for one hour. After drying, an amount of the deposited negative electrode active material layer per unit area (also referred to as an area density) on one surface of the negative electrode was 7.0 mg/cm².

### [Assembling Coin Battery for Testing]

Subsequently, solvent ethylene carbonate (EC) and dimethyl carbonate (DMC) were mixed, followed by dissolving an electrolyte salt (lithium hexafluorophosphate: LiPF₆) to prepare an electrolytic solution. In this case, the solvent composition was set to EC : DMC = 30 : 70 in a volume ratio, and the content of the electrolyte salt was set to 1 mol/kg relative to the solvent. As an additive, vinylene carbonate (VC) and fluoroethylene carbonate (FEC) were added at 1.0 mass% and 2.0 mass%, respectively.

Next, coin batteries were assembled as follows. First, Li foils having a thickness of 1 mm were punched into pieces having a diameter of 16 mm, and the pieces were attached to aluminum clads.

Then, the negative electrodes obtained beforehand were punched into pieces having a diameter of 15 mm, the pieces were faced with the Li foils attached to the aluminum clads via separators, and after electrolytic solution injection, 2032 coin batteries were produced.

### [Measurement of First-Cycle Efficiency]

First-cycle efficiency was measured under the following conditions. First, for the produced coin batteries for the first-cycle efficiency test, the charging (first charge) was performed in CCCV mode at a charge rate corresponding to 0.03 C. The CV was 0 V, and the termination current was set to 0.04 mA. Then, CC discharge (first discharge) was performed by making the discharge rate at 0.03 C as well, and a discharge termination voltage of 1.2 V.

To investigate initial charge-and-discharge characteristics, the first-cycle efficiency (hereinafter, may be referred to as initial efficiency) was calculated. The first-cycle efficiency was calculated from the equation shown by First-cycle Efficiency (%) = (First-cycle Discharge Capacity / First-cycle Charge Capacity) × 100.

### [Production of Lithium-ion Secondary Battery and Battery Evaluation]

From the obtained initial data, a counter-positive electrode was designed to achieve a utilization ratio of 95% for a negative electrode. Based on the following equation, the utilization ratio was calculated from positive and negative electrode capacities obtained with Li of a counter electrode. 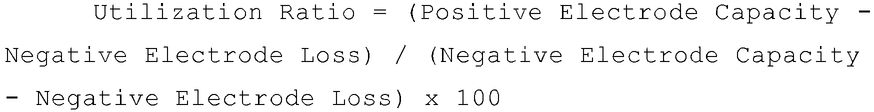 Utilization Ratio = (Positive Electrode Capacity - Negative Electrode Loss) / (Negative Electrode Capacity - Negative Electrode Loss) x 100

Each lithium-ion secondary battery in Examples and Comparative Examples (lithium-ion secondary batteries as shown in FIG. 2) was produced based on this design. Each lithium-ion secondary battery in Examples and Comparative Examples was subjected to battery evaluation.

The cycle characteristics were investigated as follows. First, for battery stabilization, two cycles of charging and discharging were performed at 0.2 C under an atmosphere of 25°C, and the discharge capacity at the second cycle was measured. The battery cycle characteristics started from the discharge capacity at the third cycle were calculated, and the battery test was stopped at 1000 cycles. The charging and discharging were performed at a charging rate of 0.7 C and a discharging rate of 0.5 C. The charge voltage was 4.3 V, the discharge termination voltage was 2.5 V, and the charge termination rate was 0.07 C.

The thickness of the condensation reaction product of KR-220L was investigated by disassembling the battery after the completion of the cycle test and observing the porous carbon structure within the negative electrode active material particles using TEM.

Table 1 shows the results of the respective measurements. Table 1 also collectively shows the results in Comparative Examples 1 and 2, and Examples 2 to 15, described later.

| | Organopolysiloxane and/or silicone oligomer | Amount used (mass%) | condensation catalyst | Amount used (mass%) | Thickness of Condensation Reaction Product (nm) | Valence of SiOx | Grain size of Si 0+ (nm) | Surface area (Porous carbon) (m²/g) | Total pore volume (Porous carbon) (cm³/g) | IUPAC Classif ication | 1000 Cycle Retention rate (%) | Single-cell capacity at 1.2 V (mAh/g) | First-cycle efficiency at 1.2 V (%) |
|---|---|---|---|---|---|---|---|---|---|---|---|---|---|
| Comparative Example 1 | | - | - | - | - | Valence of 0-2 0<x<0.7 | 1.4 | 2433 | 1.34 | I | 71 | 1938 | 88 |
| Comparative Example 2 | KR-220L | 2.0 | - | - | 2 | Valence of 0 x=0 | 1.4 | 2433 | 1.34 | I | 62 | 1964 | 90 |
| Example 1 | KR-220L | 2.0 | - | - | 2 | Valence of 0-2 0<x<0.7 | 1.4 | 2433 | 1.34 | I | 86 | 1929 | 86 |
| Example 2 | X-40-9225 | 2.0 | - | - | 2 | Valence of 0-2 0<x<0.7 | 1.4 | 2433 | 1.34 | I | 86 | 1935 | 87 |
| Example 3 | KR-220L and X-40-9225 | 2.0 each | - | - | 4 | Valence of 0-2 0<x<0.7 | 1.4 | 2433 | 1.34 | I | 83 | 1917 | 85 |
| Example 4 | KR-220L | 2.0 | DX-9740 | 0.020 | 2 | Valence of 0-2 0<x<0.7 | 1.4 | 2433 | 1.34 | I | 86 | 1928 | 86 |
| Example 5 | X-40-9225 | 2.0 | DX-9740 | 0.040 | 3 | Valence of 0-2 0<x<0.7 | 1.4 | 2433 | 1.34 | I | 85 | 1931 | 86 |
| Example 6 | KR-220L and X-40-9225 | 2.0 each | DX-9740 | 0.060 | 5 | Valence of 0-2 0<x<0.7 | 1.4 | 2433 | 1.34 | I | 84 | 1902 | 84 |
| Example 7 | KR-220L | 6.0 | - | - | 6 | Valence of 0-2 0<x<0.7 | 1.4 | 2433 | 1.34 | I | 83 | 1905 | 84 |
| Example 8 | KR-220L | 10.0 | - | - | 10 | Valence of 0-2 0<x<0.7 | 1.4 | 2433 | 1.34 | I | 82 | 1893 | 82 |
| Example 9 | KR-220L | 12.0 | - | - | 12 | Valence of 0-2 0<x<0.7 | 1.4 | 2433 | 1.34 | I | 80 | 1878 | 79 |
| Example 10 | X-40-9225 | 6.0 | - | - | 6 | Valence of 0-2 0<x<0.7 | 1.4 | 2433 | 1.34 | I | 83 | 1910 | 84 |
| Example 11 | X-40-9225 | 10.0 | - | - | 10 | Valence of 0-2 0<x<0.7 | 1.4 | 2433 | 1.34 | I | 82 | 1896 | 82 |
| Example 12 | X-40-9225 | 12.0 | - | - | 12 | Valence of 0-2 0<x<0.7 | 1.4 | 2433 | 1.34 | I | 79 | 1872 | 78 |
| Example 13 | KR-220L | 2.0 | - | - | 2 | Valence of 0-2 0<x<0.7 | 3 | 2433 | 1.34 | I | 82 | 1904 | 84 |
| Example 14 | KR-220L | 2.0 | - | - | 2 | Valence of 0-2 0<x<0.7 | 1.4 | 1653 | 0.99 | I | 83 | 1905 | 84 |
| Example 15 | KR-220L | 2.0 | - | - | 2 | Valence of 0-2 0<x<0.7 | 1.4 | 2283 | 2.84 | II | 81 | 1898 | 83 |

### (Comparative Example 1)

A negative electrode active material was produced in the same way as in Example 1, except that the step, in which acetone having 2.0 mass% KR-220L dissolved therein was added to a porous carbon material and the mixture was heated at 400°C for 2 hours while introducing nitrogen, was not performed. The negative electrode active material obtained was evaluated in the same way as in Example 1.

In the negative electrode active material in Comparative Example 1, a low-valent nano silicon oxide exposed on a surface of the porous carbon structure was not coated with a condensation reaction product of KR-220L, thereby degrading cycle characteristics.

### (Comparative Example 2)

A porous carbon structure, identical to that in Example 1, was provided. Subsequently, under the same conditions as in Example 1, amorphous silicon was formed using monosilane gas at 415°C from a porous carbon structure particle surface layer to a region close to a central portion. In this state, Si-H bonds were included in the amorphous silicon, and thus, a temperature was raised to 435°C to promote Si-Si bonding, thereby stabilizing Si-Si bonding network. Thereafter, the porous structure was cooled to reach room temperature while introducing nitride gas. Subsequently, acetone having 2.0 mass% KR-220L dissolved therein was added to the porous carbon material. The mixture was then stored in a container and heated at 400°C for 2 hours while introducing nitrogen thereto. After cooling the material to room temperature, a sample was taken out of the container through an opening to the atmosphere. When this method is employed, it is possible to experimentally produce a material without a low-valent silicon oxide compound (unlike the present invention). The negative electrode active material obtained was evaluated in the same way as in Example 1.

The negative electrode active material in Comparative Example 2 included no low-valent silicon oxide compound, and capacity thereof and first-cycle efficiency thereof were therefore high; however, reactivity with an electrolytic solution was high, thereby degrading battery cycle characteristics.

### (Examples 2 and 3)

Negative electrode active materials were produced in the same way as in Example 1, except that starting materials (at least one of an organopolysiloxane and a silicone oligomer having at least one of a silanol group and an alkoxy group that is directly bonded to a silicon atom) to form a condensation reaction product were varied as shown in Table 1 above. The negative electrode active materials obtained were evaluated in the same way as in Example 1.

Note that X-40-9225, shown in Table 1, is a silicone oligomer having a methoxy group directly bonded to a silicon atom and having CH₃SiO_{2/2}(OCH₃) as a constitutional unit, manufactured by Shin-Etsu Chemical Co., Ltd.

The silicone oligomer of X-40-9225 used herein is the silicone oligomer having a constitutional unit represented by the general formula (3) where alkyl group (methyl group: CH₃-) having 1 carbon atom is used as R³ and R⁴. Moreover, a methoxy group (CH₃O-) directly bonded to a silicon atom can be represented by the general formula (4) of the above silicone oligomer where the alkyl group (methyl group: CH₃-) having 1 carbon atom is used as R⁵.

### (Example 4)

A negative electrode active material was produced in the same way as in Example 1, except that acetone having 0.020% DX-9740 (an aluminum-based condensation catalyst manufactured by Shin-Etsu Chemical Co., Ltd.) dissolved therein was added to a porous carbon material, in addition to acetone having 2.0 mass% KR-220L dissolved therein. The negative electrode active materials obtained were evaluated in the same way as in Example 1.

### (Examples 5 and 6)

Negative electrode active materials were produced in the same way as in Example 4, except that starting materials (at least one of an organopolysiloxane and a silicone oligomer having at least one of a silanol group and an alkoxy group that is directly bonded to a silicon atom) were changed and amounts of a condensation catalyst used were varied, as shown in Table 1 above, in which the starting materials and the condensation catalyst were used to form condensation reaction products. The negative electrode active materials obtained were evaluated in the same way as in Example 1.

In the negative electrode active materials in Examples 1 to 6, at least a portion of a surface layer portion of a low-valent nano silicon oxide that is exposed on a surface of the porous carbon structure was coated with the condensation reaction product; consequently, reactivity with an electrolytic solution was suppressed. As a result, cycle characteristics in Examples 1 to 6 were superior to those in Comparative Example 1.

### (Examples 7 to 9)

Negative electrode active materials were produced in the same way as in Example 1, except that amounts of KR-220L used were varied as shown in Table 1 above. The negative electrode active materials obtained were evaluated in the same way as in Example 1.

### (Examples 10 to 12)

Negative electrode active materials were produced in the same way as in Example 2, except that amounts of X-40-9225 used were varied as shown in Table 1 above. The negative electrode active materials obtained were evaluated in the same way as in Example 1.

Cycle characteristics in Examples 9 to 12 were improved than those in Comparative Examples 1 and 2. Based on this result, it is indicated that even when thicknesses of condensation reaction products exceed 10 nm, cycle characteristics are improved. In contrast, the cycle characteristics in Example 9 were inferior to those in Examples 1, 7, and 8. The cycle characteristics in Example 12 were inferior to those in Examples 5, 10, and 11. From this result, it is supposed that the condensation reaction product desirably has a thickness of 10 nm or less.

### (Example 13)

A negative electrode active material was produced by applying different conditions to the porous carbon structure as in Example 1, as shown below. First, a temperature was raised to 415°C, and monosilane gas was then introduced for deposition for 4 hours. Subsequently, the temperature was further raised to grow a grain size of Si⁰⁺. Subsequently, the temperature was lowered to room temperature while introducing nitrogen gas. After lowering the temperature to 25°C, oxygen diluted 20-fold with nitrogen was introduced, this was adjusted such that the temperature of the material was maintained at 50°C or lower, thereby forming Si-O bonds. Next, when the temperature of the material was lowered to 30°C or lower by introducing nitrogen containing oxygen for 2 hours, the nitrogen containing oxygen was switched to nitrogen gas, which was then introduced for 60 minutes. Subsequently, acetone having 2.0 mass% KR-220L dissolved therein was added to the porous carbon material. The mixture was then stored in a container and heated at 400°C for 2 hours while introducing nitrogen thereto. After cooling the material to room temperature, the material was taken out of the container and obtained as a negative electrode active material. The negative electrode active material obtained was evaluated in the same way as in Example 1.

Although cycle characteristics exhibited in Example 13 were improved compared to those in Comparative Example 1, but were inferior to those in Example 1. Specifically, a grain size in Example 13 was larger than that in Example 1, resulting in a slightly degraded cycle characteristics (1000 cycle retention rate in Table 1). This result indicates that the smaller grain size is more preferable. In this regard, the smaller grain size represents a structure closer to an amorphous structure. It is therefore considered that as the structure of the negative electrode active material becomes closer to an amorphous structure, the cycle characteristics are improved.

### (Examples 14 and 15)

Negative electrode active materials were produced in the same way as in Example 1, except that, as initial porous carbon structures to be provided, those having different characteristics were employed as shown in Table 1. The negative electrode active materials obtained were evaluated in the same way as in Example 1.

Cycle characteristics exhibited in Examples 14 and 15 were improved compared to those in Comparative Example 1, but were inferior to those in Example 1. Based on the result, the porous carbon structure more desirably has a pore volume of 1 cm³/g or more and BET specific surface area of 1400 m²/g or more, and is desirably of Type I according to the IUPAC classification.

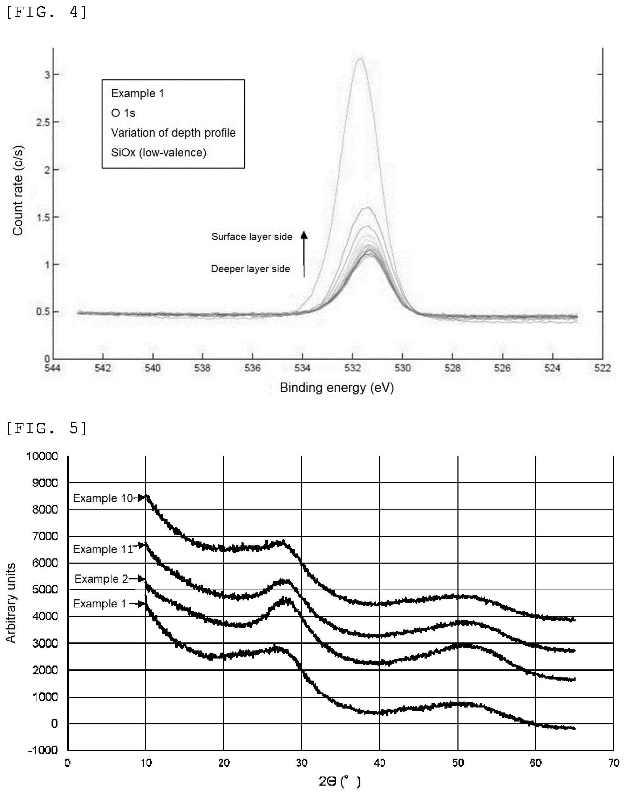

FIG. 4 shows a change in a depth-profile measurement in an O 1s region in an XPS measurement of a negative electrode active material in Example 1. As found from FIG. 4, the O 1s peak becomes smaller from the surface toward the depth direction, indicating that oxygen concentration decreases from the surface toward the deep layer side.

FIG. 5 shows X-ray diffraction spectra in Examples 1, 2, 10, and 11. Peaks are observed near 2θ=28° in each of Examples, and crystallite sizes of silicon are calculated from these peaks. The same applies to other Examples and Comparative Examples.

The present description includes the following embodiments.
[1]: A negative electrode active material containing negative electrode active material particles, wherein
   the negative electrode active material particles contain a porous carbon structure,
   a low-valent nano silicon oxide in an amorphous state is dispersed within the porous carbon structure,
   the low-valent nano silicon oxide includes SiOx where "x" is less than 1.0, and
   at least a portion of a surface layer portion of the low-valent nano silicon oxide that is exposed on a surface of the porous carbon structure is coated with a condensation reaction product of at least one of an organopolysiloxane and a silicone oligomer having at least one of a silanol group and an alkoxy group that is directly bonded to a silicon atom.
[2]: The negative electrode active material of the above [1], wherein
   the organopolysiloxane has a constitutional unit represented by the following general formula (1), and a group represented by the following general formula (2) that is directly bonded to a silicon atom:

      R¹-SiO_{3/2} (1)
   wherein R¹ represents a substituted or unsubstituted alkyl group having 1 to 3 carbon atoms, and

      -OR² (2)
   wherein R² represents a hydrogen atom or a substituted or unsubstituted alkyl group having 1 to 6 carbon atoms.
[3]: The negative electrode active material of the above [1] or [2], wherein
   the silicone oligomer has a constitutional unit represented by the following general formula (3), and a group represented by the following general formula (4) that is directly bonded to a silicon atom:

      R³SiO_{2/2}(OR⁴) (3)
   wherein each R³ independently represents a substituted or unsubstituted alkyl group having 1 to 3 carbon atoms, and each R⁴ independently represents a hydrogen atom or a substituted or unsubstituted alkyl group having 1 to 6 carbon atoms, and

      -OR⁵ (4)
   wherein R⁵ represents a hydrogen atom or a substituted or unsubstituted alkyl group having 1 to 6 carbon atoms.
[4]: The negative electrode active material of any of the above [1] to [3], wherein
   the condensation reaction product has a thickness of 0.1 nm or more and 10 nm or less.
[5]: The negative electrode active material of any of the above [1] to [4], wherein
   the low-valent nano silicon oxide is in a substantially composite state of 0-valent, 1-valent, and 2-valent.
[6]: The negative electrode active material of any of the above [1] to [5], wherein
   the low-valent nano silicon oxide dispersed in the porous carbon structure has "x" that increases from a center toward a surface layer of the porous carbon structure.
[7]: The negative electrode active material of any of the above [1] to [6], wherein
   a grain size of 0-valent Si constituting the low-valent nano silicon oxide is in a range of 1 nm to 5 nm, in which the grain size is calculated using Scherrer's equation from a peak measured by X-ray diffraction measurement of the negative electrode active material particles.
[8]: The negative electrode active material of any of the above [1] to [7], wherein
   the porous carbon structure is predominantly of Type I according to the IUPAC classification, and has a surface area of 1400 m²/g or more and a pore volume of 1 cm³/g or more.
[9]: A method for producing a negative electrode active material containing negative electrode active material particles, the method comprising the steps of:
   providing a porous carbon structure;
   depositing silicon within the porous carbon structure by introducing monosilane gas to the porous carbon structure while heating;
   cooling a material in which silicon has been deposited within the porous carbon structure to 50°C or lower;
   after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure; and
   coating at least a portion of a surface layer portion of the low-valent nano silicon oxide with a condensation reaction product of at least one of an organopolysiloxane and a silicone oligomer having at least one of a silanol group and an alkoxy group that is directly bonded to a silicon atom.
[10]: The method for producing a negative electrode active material of the above [9], wherein
   the condensation reaction product is formed on at least a portion of the surface layer portion of the low-valent nano silicon oxide by hydrolysis and dehydration-condensation of at least one of the organopolysiloxane and the silicone oligomer, thereby coating at least a portion of the surface layer portion of the low-valent nano silicon oxide.
[11]: The method for producing a negative electrode active material of the above [9] or [10], wherein
   at least one of the organopolysiloxane and the silicone oligomer is subjected to the hydrolysis and the dehydration-condensation by adding a catalytic amount of a condensation catalyst.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode active material containing negative electrode active material particles, wherein
the negative electrode active material particles contain a porous carbon structure,
a low-valent nano silicon oxide in an amorphous state is dispersed within the porous carbon structure,
the low-valent nano silicon oxide includes SiOx where "x" is less than 1.0, and
at least a portion of a surface layer portion of the low-valent nano silicon oxide that is exposed on a surface of the porous carbon structure is coated with a condensation reaction product of at least one of an organopolysiloxane and a silicone oligomer having at least one of a silanol group and an alkoxy group that is directly bonded to a silicon atom.

2. The negative electrode active material according to claim 1, wherein
the organopolysiloxane has a constitutional unit represented by the following general formula (1), and a group represented by the following general formula (2) that is directly bonded to a silicon atom:
R¹-SiO_{3/2} (1)
wherein R¹ represents a substituted or unsubstituted alkyl group having 1 to 3 carbon atoms, and
-OR² (2)
wherein R² represents a hydrogen atom or a substituted or unsubstituted alkyl group having 1 to 6 carbon atoms.

3. The negative electrode active material according to claim 1, wherein
the silicone oligomer has a constitutional unit represented by the following general formula (3), and a group represented by the following general formula (4) that is directly bonded to a silicon atom:
R³SiO_{2/2} (OR⁴) (3)
wherein each R³ independently represents a substituted or unsubstituted alkyl group having 1 to 3 carbon atoms, and each R⁴ independently represents a hydrogen atom or a substituted or unsubstituted alkyl group having 1 to 6 carbon atoms, and
-OR⁵ (4)
wherein R⁵ represents a hydrogen atom or a substituted or unsubstituted alkyl group having 1 to 6 carbon atoms.

4. The negative electrode active material according to claim 1, wherein
the condensation reaction product has a thickness of 0.1 nm or more and 10 nm or less.

5. The negative electrode active material according to claim 1, wherein
the low-valent nano silicon oxide is in a substantially composite state of 0-valent, 1-valent, and 2-valent.

6. The negative electrode active material according to claim 1, wherein
the low-valent nano silicon oxide dispersed in the porous carbon structure has "x" that increases from a center toward a surface layer of the porous carbon structure.

7. The negative electrode active material according to claim 1, wherein
a grain size of 0-valent Si constituting the low-valent nano silicon oxide is in a range of 1 nm to 5 nm, in which the grain size is calculated using Scherrer's equation from a peak measured by X-ray diffraction measurement of the negative electrode active material particles.

8. The negative electrode active material according to claim 1, wherein
the porous carbon structure is predominantly of Type I according to the IUPAC classification, and has a surface area of 1400 m²/g or more and a pore volume of 1 cm³/g or more.

9. A method for producing a negative electrode active material containing negative electrode active material particles, the method comprising the steps of:
providing a porous carbon structure;
depositing silicon within the porous carbon structure by introducing monosilane gas to the porous carbon structure while heating;
cooling a material in which silicon has been deposited within the porous carbon structure to 50°C or lower;
after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure; and
coating at least a portion of a surface layer portion of the low-valent nano silicon oxide with a condensation reaction product of at least one of an organopolysiloxane and a silicone oligomer having at least one of a silanol group and an alkoxy group that is directly bonded to a silicon atom.

10. The method for producing a negative electrode active material according to claim 9, wherein
the condensation reaction product is formed on at least a portion of the surface layer portion of the low-valent nano silicon oxide by hydrolysis and dehydration-condensation of at least one of the organopolysiloxane and the silicone oligomer, thereby coating at least a portion of the surface layer portion of the low-valent nano silicon oxide.

11. The method for producing a negative electrode active material according to claim 10, wherein
at least one of the organopolysiloxane and the silicone oligomer is subjected to the hydrolysis and the dehydration-condensation by adding a catalytic amount of a condensation catalyst.
